# EUROPEAN PATENT APPLICATION

(11) **EP 4 338 910 A1**
(43) Date of publication of application: **20.03.2024**
(21) Application number: 23197006.2
(22) Date of filing: 12.09.2023
(51) Int. Cl.: B27M 1/08, B23Q 11/00, B23Q 35/10, B23Q 15/24, B27C 5/00

(54) **PANEL WORKING MACHINE COMPRISING A FEELER WITH FLOATING OPERATING HEAD OF THE MACHINE**

(30) Priority: 13.09.2022 IT 202200018714
(71) Applicant: Essepigi S.r.l., 61038 Terre Roveresche (PS) (IT)
(72) Inventor: PATREGNANI, Luigi, 61032 FANO (PU) (IT)
(74) Representative: Baldi, Claudio

(57) **Abstract**

A machine (M) for machining a panel (P) comprising a working unit (MT) having a support head (T) and an operating head (L), and a handling unit (M1) for moving said working unit (MT); wherein the operating head (L) comprises a support frame (S), a spindle (20) supported by the support frame (S) and suitable for attaching a tool (U), a feeler unit (1) mounted on the support frame (S) supporting a feeler (3); wherein the working unit (MT) comprises handling means (5) for moving said operating head (L) relative to the support head (T) and compensation means (4) suitable for pushing the operating head (L) in a controlled manner toward the panel (P) and keep the feeler (3) in contact against the panel (P).

## Description

The present patent application for industrial invention relates to a panel working machine comprising a feeler with floating operating head of the machine.

Specifically, the present invention relates to machines for the milling or pantographing of panels made of wood (such as door panels or doors), or wood derivatives, or panels made of plastic or similar materials.

As it is well known, such machines comprise a worktop where the panel to be machined is disposed, a support head moved above the worktop by means of suitable handling means, an electrospindle mounted on the head having an attachment to which a milling tool is rigidly attached. The support head is moved in the space according to a predetermined path so that the tool can engrave the panel, generating incisions and/or grooves on the panel surface.

In most of the cases, the surfaces of the panels to be machined are not perfectly flat and therefore have irregularities, unevenness and roughness. Such irregularities originate milling problems because the milling depth sometimes does not correspond to the value set in an electronic unit of the machine. More precisely, incisions or grooves of less depth than the preset depth will be made in correspondence of depressions on the surface of the panel, whereas incisions or grooves of greater depth than the preset depth will be made in correspondence of protrusions on the surface of the panel. This will result in the presence of incisions, grooves and milling with different depths that are unacceptable and greatly reduce the value of the final artifact.

In order to overcome these problems, new systems have been adopted over time that allow the tool to be raised or lowered in accordance with the unevenness and irregularities of the panel surface. In particular, such systems are commonly referred to as "copying aggregates."

Copying aggregates are configured in such a way that, instead of being connected directly to the attachment of the spindle in a rigid manner, the milling tool is connected indirectly and movably to the attachment of the spindle, that is, in such a way that it can float along the axis of rotation on which it rotates.

Conventional copying aggregates available on the market comprise:
- a first portion engaged on the attachment of the spindle; and
- a second portion or translating portion slidingly connected to the first portion by means of a mechanical sliding system and on which the tool is attached.

The second portion or translating portion further comprises an annular feeler from which an end section of the milling tool centrally protrudes.

The end section of the tool protruding from the annular feeler corresponds to the depth at which the tool is to work constantly in the panel. The second portion comprises adjustment means that adjust the relative position of the tool with respect to the annular feeler so as to adjust the depth at which the tool is to work.

Preloaded pushing means are provided between the first portion and the second portion to modulate the thrust of the second portion against the panel surface.

During the machining or milling of the panel, when the annular feeler encounters a protrusion or a depression, the second portion is raised or lowered, thus following the profile of the panel surface and allowing the tool to always work at the same depth despite the presence of surface irregularities on the panel. However, although they are frequently used in the panel machining sector, such copying aggregates are impaired by several drawbacks.

Firstly, such copying aggregates are extremely expensive, and for each type of tool it is necessary to use its corresponding copying aggregate. The provision of multiple copying aggregates - one for each tool - obviously makes such a solution extremely expensive. In addition, the fact that the copying aggregate needs to be replaced every time a different tool is used results in long downtimes with consequent waste of time.

Moreover, such aggregates are extremely complex to make and likewise they are subject to frequent failure and malfunction.

Additionally, the mechanical sliding system provided between the translating portion and the fixed portion of the aggregate has a clearance that affects the spindle and the rotating tool, generating inaccuracies in milling operations. In addition, the aggregates interposed between the spindle and the tool cannot withstand excessive stresses, and therefore several operations with different tools and at progressive depths must be performed in order to obtain wide and deep grooves (as in pantographing). The execution of several operations with different tools and at progressive depths greatly increases the machining time of the panel.

Another drawback occurs during the replacement of the copying aggregate. In fact, the position of the tool must be adjusted at each replacement of the aggregate, and in addition it is also necessary to adjust the preload of the pushing means acting on the movable portion. Such operations are carried out manually by an operator and are extremely complex and time-consuming to perform. In addition, the intervention of the operator to preload the pushing means or adjust the tool obviously affects the repeatability, in terms of the accuracy of the quality of the operation performed. In fact, despite the skill and expertise of the operator, small errors and inaccuracies can occur, resulting in the generation of rejected pieces when the quality of the machining operation is not satisfactory.

EP1586414A2 describes a toolhead of a multi-axis machine tool. The toolhead comprises a first part that supports a spindle for a tool with a machining axis and a second part that can be anchored to the machine tool. The first part is rotatably mounted with respect to the second part in such a way to rotate about an axis of rotation orthogonal to the machining axis of the spindle. A probe is movably mounted on the first part, which consists of a ring that is intended to be crossed by the tool and to butt against the surface of the panel to be drilled or countersunk. Pushing means and actuators act on the probe in order to translate the probe between a first extended position, distanced from the spindle, and a retracted second position of proximity to the spindle.

Specifically, the pushing means are configured to exert a constant thrust action on the probe such that, when the actuators are inactive, the probe is arranged in the first extended position which allows an operator to change the spindle tool. On the other hand, the actuators are configured in such a way to overcome the thrust force exerted by the thrust means to bring the probe to the retracted position or to an intermediate position between the retracted position and the extended position so that the working depth of the tool can be adjusted.

Since the document EP1586414A2 deals with a toolhead for drilling holes or countersinking and not for making incisions or grooves, the document EP1586414A2 does not describe means or systems that allow the toolhead to float in accordance with the roughness or unevenness of the panel.

WO02074486A1 describes a machine tool for the working of panels. The machine tool comprises a support frame on which a plurality of head assemblies is mounted. Each head assembly comprises a guide plate and an operating assembly movably mounted in vertical direction relative to the guide plate.

The operating assembly comprises a spindle with a tool, a feeler consisting of a ring crossed by the tool, mechanical adjusting means connected to the spindle for adjusting the relative position between the tool and the feeler in order to define the working depth of the tool, and vertical handling means consisting of cylinder-piston assemblies designed to move the entire operating assembly along a vertical axis.

The vertical handling means, which consist of the cylinder-piston assemblies, are intended to perform a dual function: to lower the entire operating assembly to an operating height where the feeler is against the panel, and to push the entire operating assembly toward the panel to keep the feeler constantly against the panel. However, such a machine tool has a drawback due to the fact that the handling means (consisting of the cylinder-piston assemblies) perform the dual function of bringing the operating assembly to the working height and pushing the operating assembly against panel.

During the pushing phase of the operating assembly, the system described in WO02074486A1 is of on-off type, i.e., all the fluid pressure in the cylinders is discharged to the feeler against the panel during the milling phase. In addition, the handling means are unable to balance the weight of the operating assembly, which would then burden the panel in addition to the thrust mentioned above. Therefore, such a system is unable to control and adjust the thrusts of the feeler and of the tool on the workpiece, thus affecting the integrity of the panel, which is often a finished element.

In addition, the thrust action of the cylinder-piston assemblies of the handling equipment varies according to the position of the pistons relative to the cylinders when the working assembly is disposed at the working height. So, depending on the working height of the working assembly, there will be a different response of the handling means to unevenness and roughness. Therefore, the system described in WO02074486A1 does not allow the working assembly to float effectively to compensate for unevenness in the panels.

EP0652074A1 describes a machining head for machining printed circuit boards. The machining head is attached to a carriage that moves up-and-down on a support frame. The machining head comprises a support plate, an electrospindle with a tool, a board holder, and actuators that move the board holder so as to vary the relative distance between the board holder and the spindle. Since EP0652074A1 deals with a machining head for drilling holes in printed circuit boards and not incisions or grooves, EP0652074A1 does not describe means or systems that allow the machining head to float in accordance with roughness or unevenness of the panel.

EP1066916A2 describes a tool holder unit that can be attached to and detached from a spindle. The unit comprises a mounting spindle having a first end engaged with the spindle and a second end having an attachment for a tool. The unit further includes a first casing crossed by the mounting spindle and a second casing crossed by the mounting spindle and having a ring crossed by the tool. The second casing is slidingly mounted relative to the first casing so that the position of the ring relative to the tool can be adjusted. The tool holder unit also includes:
- springs that constantly push the second casing away from the first casing; and
- actuators that adjust the relative position between the first casing and the second casing by counteracting the pushing action of the springs.

EP1066916A2 does not describe means or systems that enable the tool head to float in accordance with roughness or unevenness of a panel.

The purpose of the present invention is to overcome the drawbacks of the prior art by devising a panel working machine that allows the tool to work or mill a panel always at the same depth despite the presence of irregularities in the surface of the panel while avoiding the use of said copying aggregates.

Another purpose is to devise a panel working machine in which the milling variables, such as the thrust pressure of the tool on the workpiece and the contact pressure of the feeler on the panel, can be controlled directly from a single control unit of the machine.

Another purpose is to devise a panel working machine having a feeler unit in which the contact pressure between the feeler and the panel is always constant, both in the case of depressions and in the case of protrusions of the panel surface or curvatures of the panel from the nominal value.

A further purpose of the present invention is to devise a panel working machine in which the tool can be changed quickly and easily and the machine is able to control the pressure of the feeler on the panel even after the tools have been changed.

Another purpose is to devise a panel working machine that allows wide and deep grooves to be made with a reduced number of tools and a reduced number of operations compared to those that are needed with the copying aggregates of the prior art, thus minimizing machine downtime and working time.

Another purpose is to devise a panel working machine that allows a panel to be milled or machined with the tool connected directly to the attachment of the electrospindle in such a way that milling is always achieved at the same depth and in an extremely precise manner, ensuring a high accuracy and repeatability of the machining operation, thus increasing the efficiency of the production process.

A further purpose of the present invention is to devise a machine that is capable of machining both large and small panels indiscriminately.

Another purpose is to devise a panel working machine in which it is possible to perform milling in three dimensions while maintaining the compensation means active to compensate for the irregularities in the panels being machined.

A further purpose is to devise a panel working machine that is capable of machining different panels always in the same way, that is, a machine that does not vary its behavior according to the working height of an operating head of the machine.

These purposes are achieved in accordance with the invention with the features listed in the attached independent claim 1.

Advantageous achievements appear from the dependent claims.

The machine according to the invention is defined by claim 1.

For explanatory clarity, the description of the machine according to the invention continues with reference to the attached drawings, which are for illustrative and non-limiting purposes only, wherein:
Fig. 1 is a diagrammatic side view of a working unit of the machine according to the invention with an operating head in raised position;
Fig. 2 is a diagrammatic side view of the working unit of the machine according to the invention with the operating head in lowered position;
Fig. 3 is an axonometric view illustrating pushing means of the working unit and handling means for said pushing means;
Fig. 3A is a longitudinal sectional view of the pushing means arranged in an initial position;
Fig. 3B is a longitudinal sectional view of the pushing means arranged in a second position;
Figs. 3C, 3D and 3E schematically show the behavior of the pushing means during the machining of a panel;
Fig. 3F is a longitudinal cross-sectional view of the pushing means in locking position;
Fig. 4 is a front view of the operating head with an annular foot of a feeler of the operating head coaxial to the spindle and in lowered position;
Fig. 5 is a front view of the operating head with the annular foot of a feeler the operating head coaxial to the spindle and in raised position;

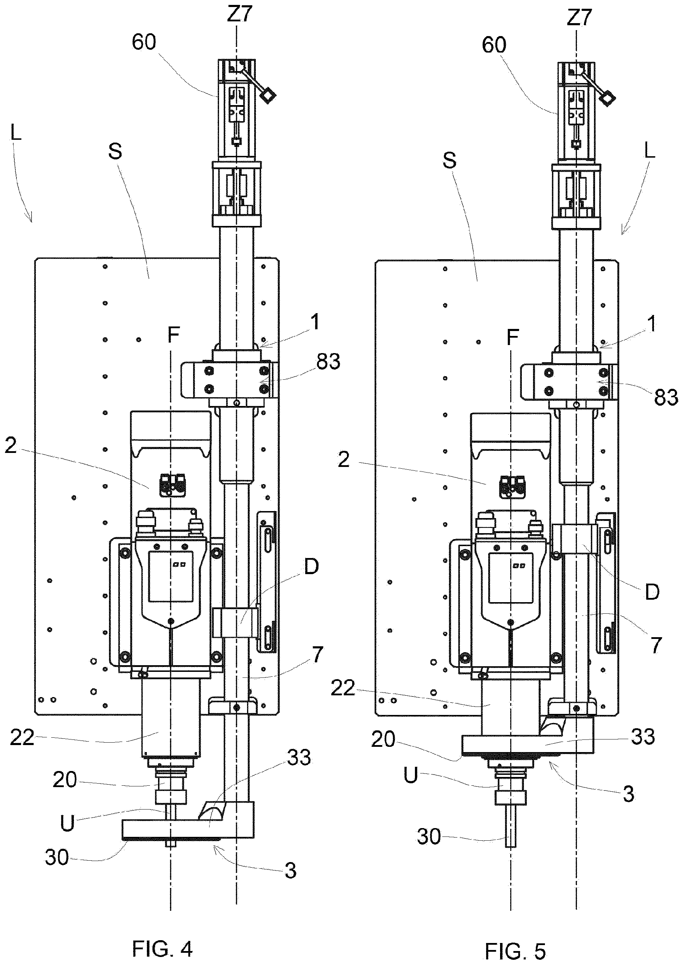

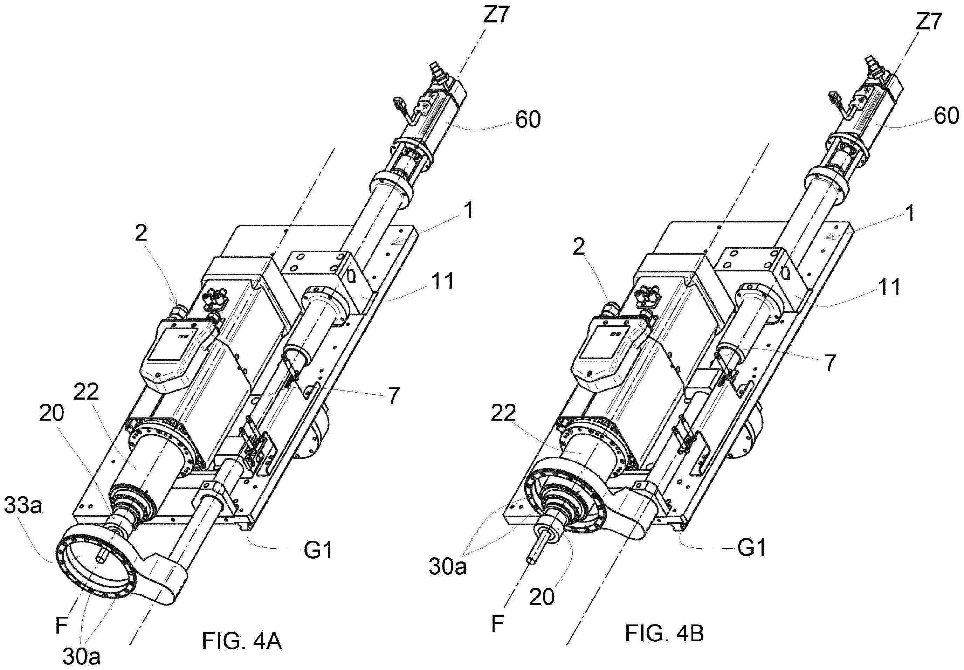

Fig. 4A is an axonometric view from below of the operating head arranged in the same position as Fig. 4;
Fig. 5A is an axonometric view from below of the operating head in the same position as Fig. 5;

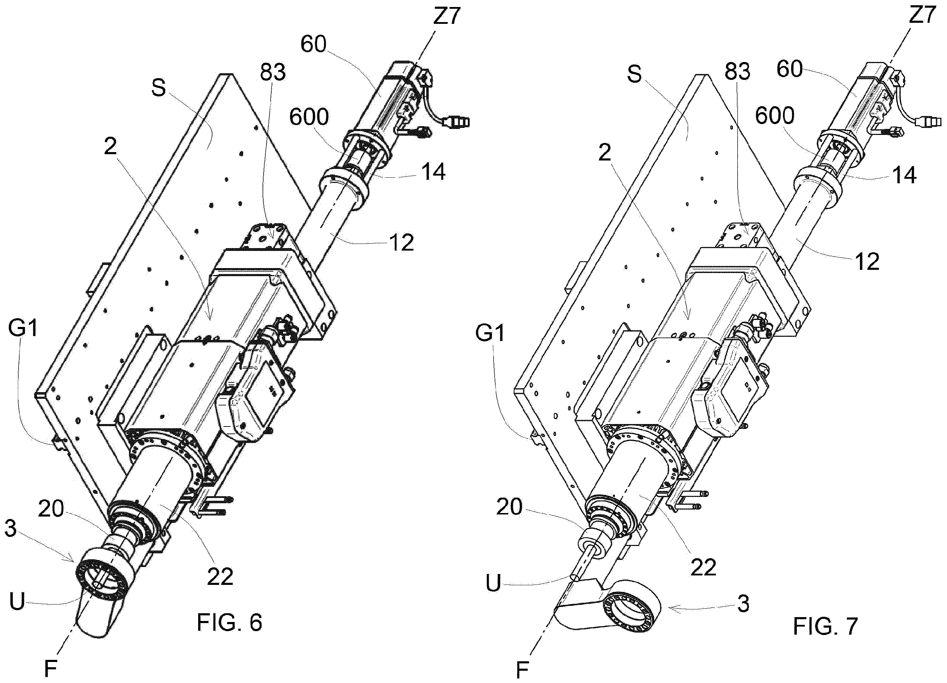

Fig. 6 is an axonometric view from below of the operating head with an annular foot suitable for small panels coaxial to the spindle and in lowered position;
Fig. 7 is an axonometric view of the operating head with the annular foot suitable for small panels not coaxial to the spindle;

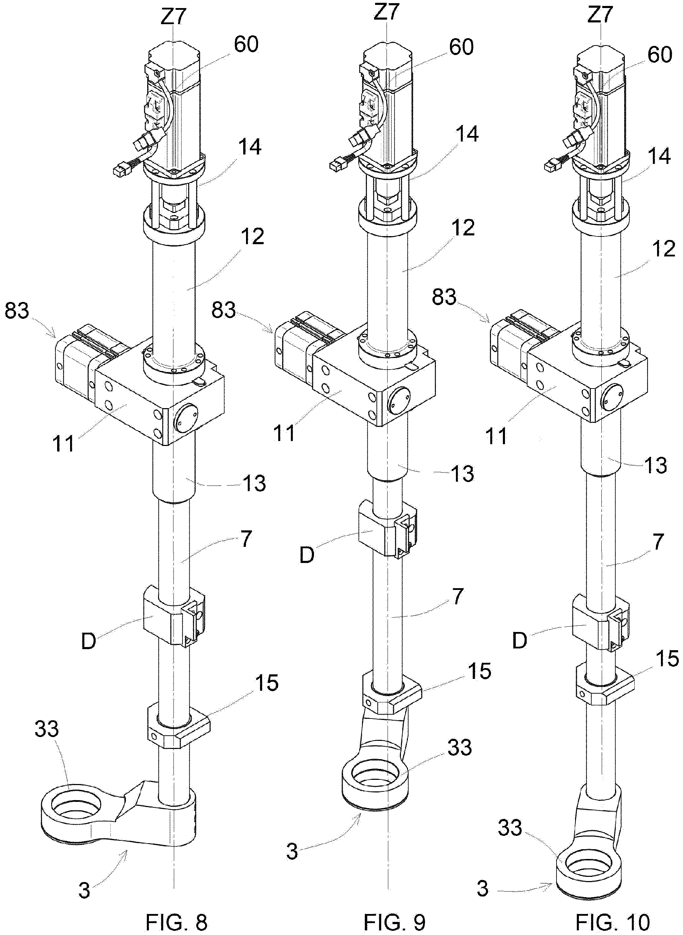

Figs. 8, 9 and 10 are three views in axonometry of the feeler unit and of the feeler illustrating three different positions of the feeler;

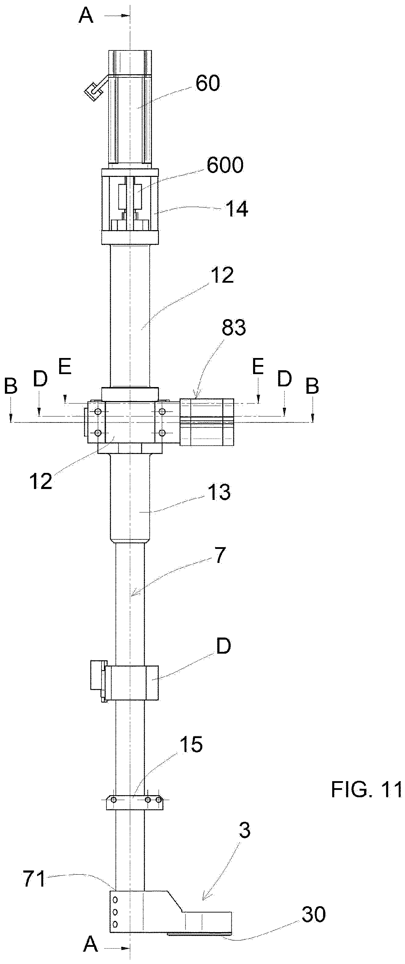

Fig. 11 is a side view of the feeler unit;

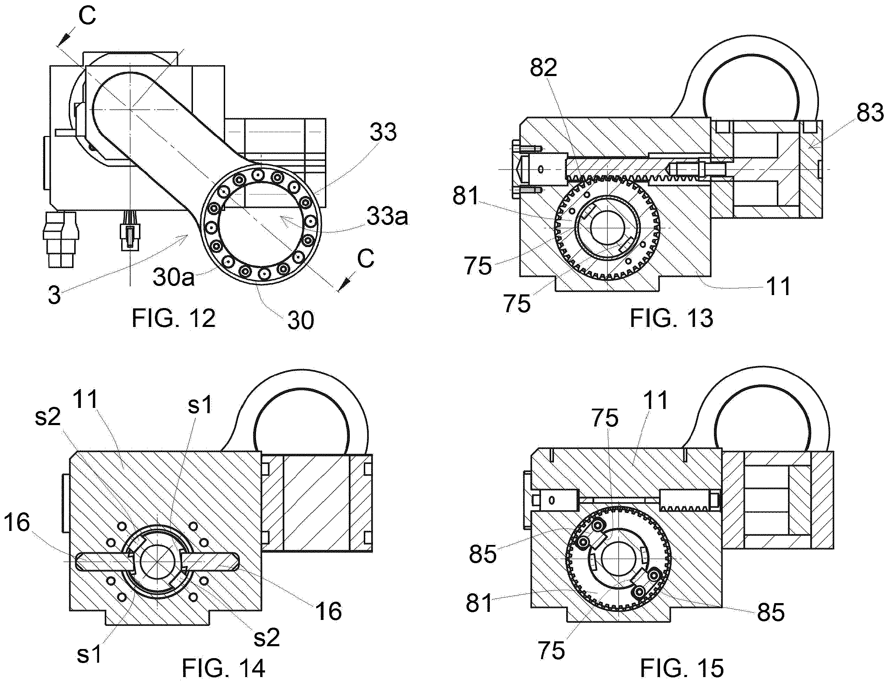

Fig. 12 is a bottom view of the feeler unit;
Figs. 13, 14 and 15 are cross-sections of the feeler unit and of the feeler sectioned according to the B-B, D-D and E-E planes, respectively;

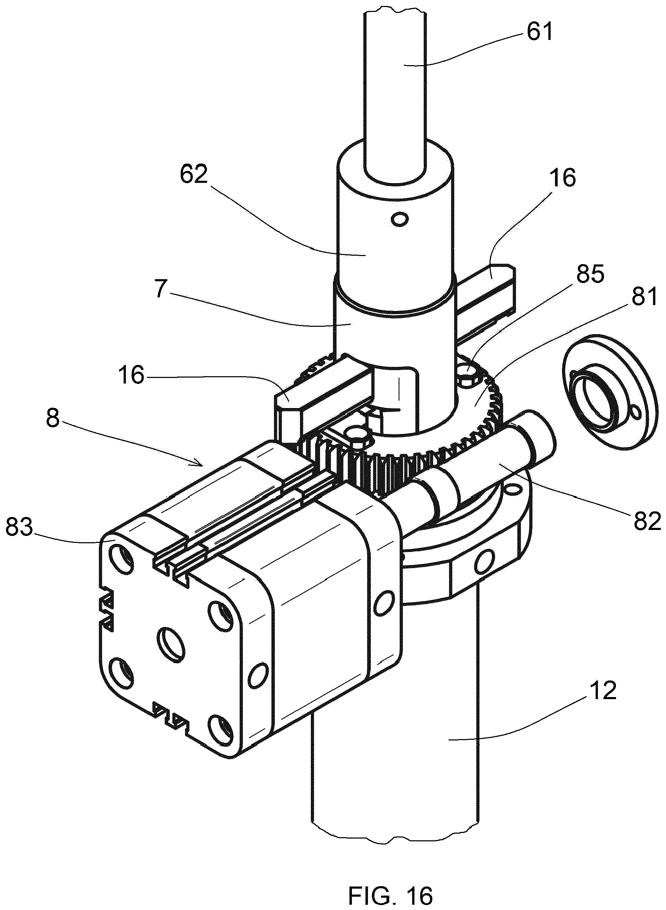

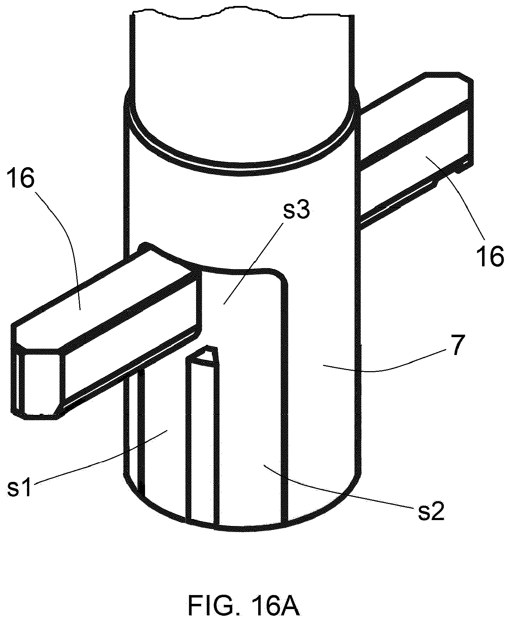

Fig. 16 is a detailed view of means of rotation of the shaft of the feeler unit;
Fig. 16A is a detailed view of pairs of guiding grooves machined on the shaft on which respective guide keys are coupled;

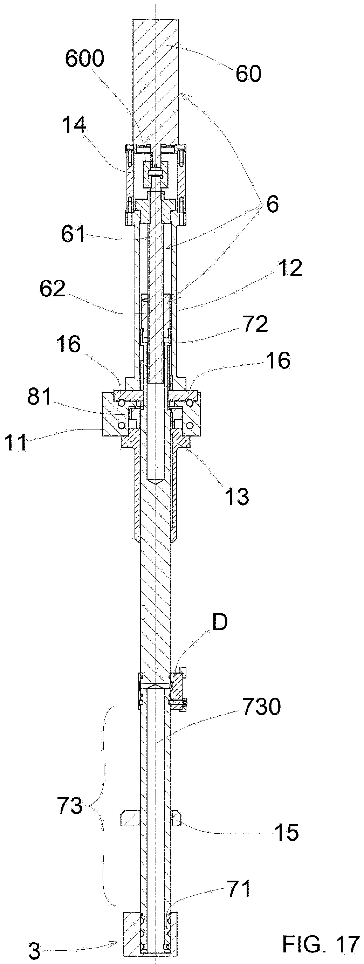

Fig. 17 is a longitudinal sectional view of the feeler unit sectioned according to the longitudinal plane A-A of Fig. 11;

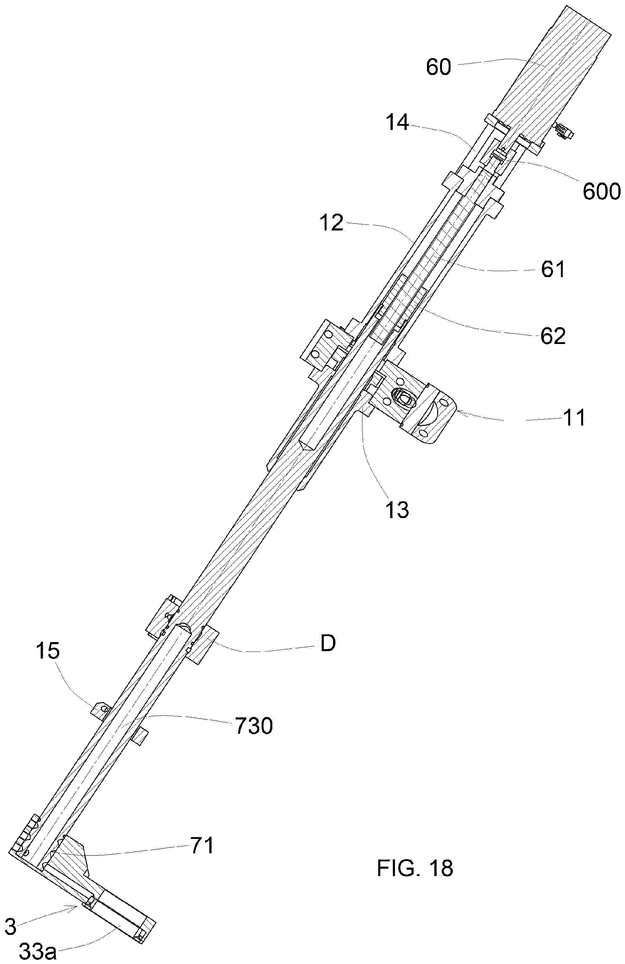

Fig. 18 is a longitudinal sectional view of the feeler unit sectioned according to the C-C plane of Fig. 12;

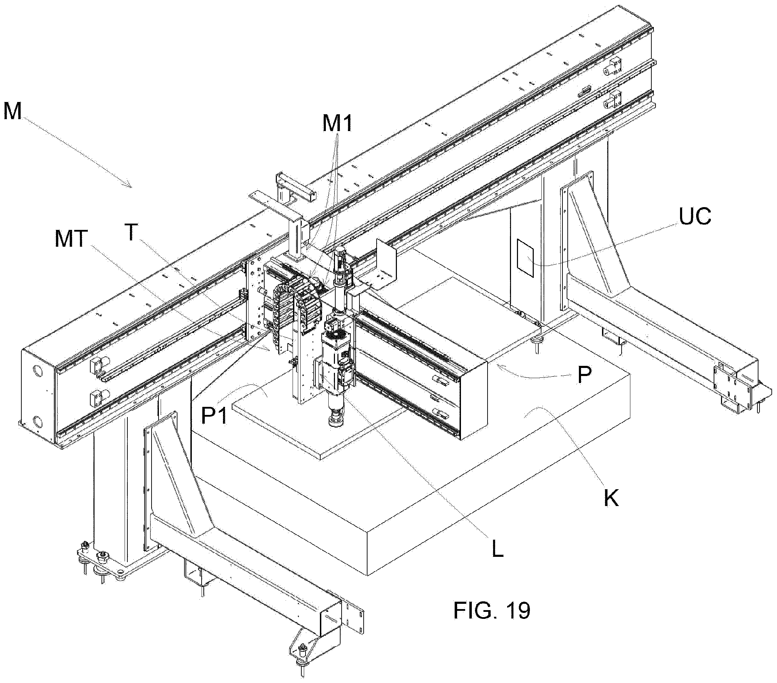

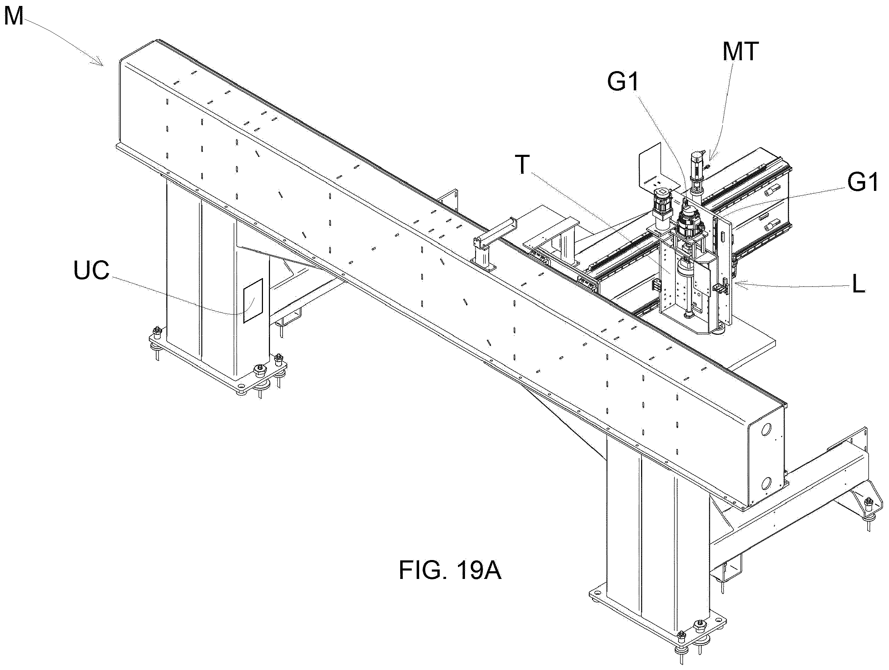

Fig. 19 and 19A are axonometric views of a panel working machine;

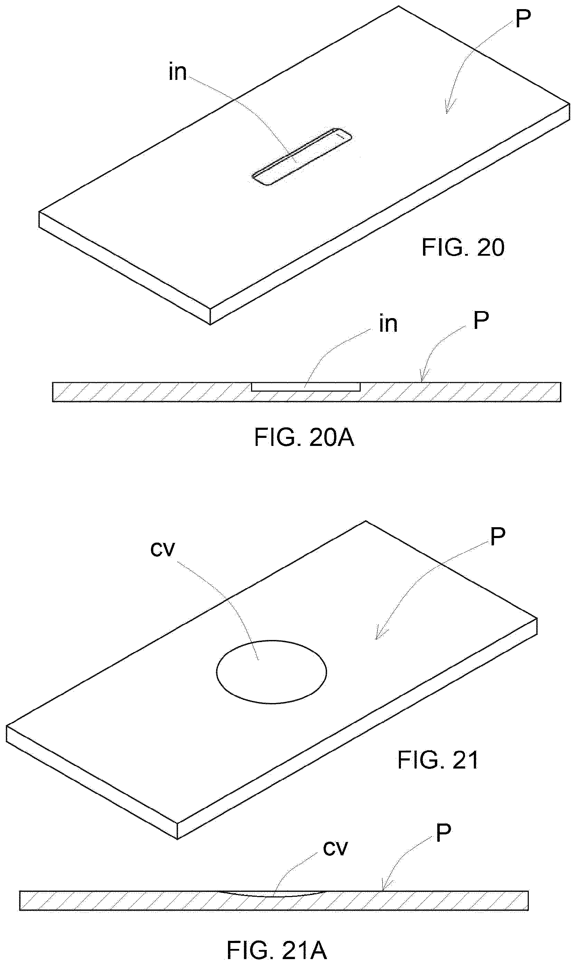

Figs. 20 and 20A are an axonometric view and a cross-sectional view of an incision with variable depth made with the machine according to the invention, maintaining a copying effect of the panel surface;
Figs. 21 and 21A are an axonometric view and a cross-sectional view of a panel with a pseudo-spherical cavity made with the machine according to the invention, maintaining a copying effect of the panel surface.

Hereinafter with reference to the attached figures, a numerically controlled machine for machining a panel according to the invention is described. The machine is indicated with the reference letter "M." The machine (M) is shown schematically and only as an example in Figs. 19 and 19A.

The machine (M) comprises:
- a working unit (MT) comprising a support head (T) and an operating head (L) connected to the support head (T);
- a handling unit (M1) to move said working unit (MT);
- a worktop (K) where a panel (P) to be machined is intended to be placed.

The machine (M) is shown schematically in Figs. 19 and 19A as a generic machine with an upper bridge. In such a case, the handling unit (M1) is configured to move the working unit (MT) along three orthogonal directions, i.e., along two axes of a plane parallel to the worktop (K) and along an axis orthogonal to the worktop (K) so as to move the working unit (MT) closer to or farther away from the worktop (K).

Although in Figs. 19 and 19A the machine (M) is shown as a machine with upper bridge, in an alternative embodiment of the invention, said machine (M) comprises a robotic arm that moves the working unit (MT) in the space by means of a handling unit composed of means known to a technician of the field.

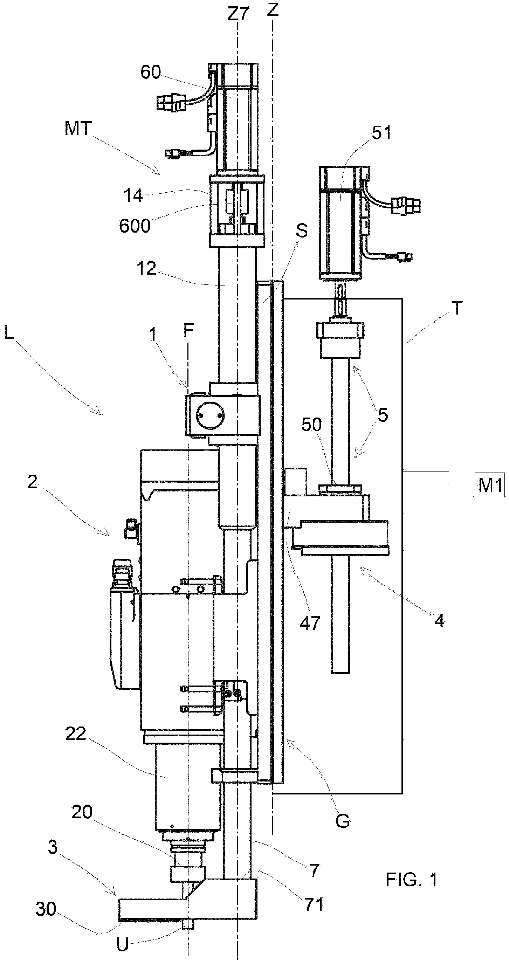

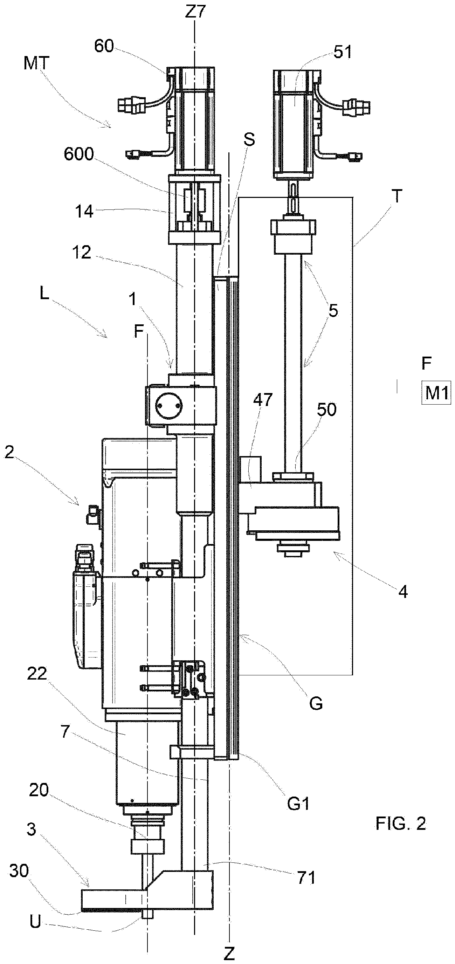

Now with reference to Figs. 1 and 2, the support head (T) of the working unit (MT) is shown schematically as a rectangle, whereas the operating head (L) of the working unit (MT) is shown in detail with all its elements.

The operating head (L) comprises:
- a support frame (S) consisting of a plate that is arranged vertically;
- a spindle (20) rotatably supported by the support frame (S) around an axis of rotation (F); said spindle (20) being suitable for tightening a tool (U) to machine the panel (P);
- drive means (2) consisting of an electric motor mounted on the support frame (S) to drive said spindle (20) in rotation;
- a feeler unit (1) mounted on the support frame (S);
- a feeler (3) supported by the feeler unit (1); the feeler (3) comprises an abutment surface (30) suitable for abutting against a surface (P1) of the panel (P) during the machining of the panel.

Preferably, the spindle (20) and the drive means (2) are part of a single electrospindle also comprising an end part (22) to which the spindle (20) is connected and which is commonly referred to as the electrospindle nose.

The working unit (MT) comprises guiding means (G) that slidingly connect the operating head (L) to the support head (T).

The guiding means (G) are conformed in such a way as to allow the entire operating head (L) to translate relative to the support head (T) along a vertical axis of translation (Z) orthogonal to the abutting surface (30) of the feeler (3). The guiding means (G) comprise two vertical guides (G1), which are shown specifically in Fig. 19A, attached to the operating head (L) and suitable for sliding on grooves (not shown in the attached figures) machined on the support head (T).

The entire operating head (L) can be lowered or raised, or can be adjusted in position relative to the support head (T).

In this regard, the working unit (MT) comprises handling means (5) for moving the operating head (L) relative to the support head (T) and along the vertical axis of translation (Z) so as to position the operating head (L) at a predetermined working height at which the feeler (3) abuts against the surface (P1) of the panel (P).

The working unit (MT) also includes compensation means (4) arranged between the operating head (L) and the handling means (5). In this way, the compensation means (4) support the operating head (L) and are moved by the handling means (5).

The compensation means (4) are functionally separate from the handling means (5).

In fact, the handling means (5) are only designed to translate the operating head (L) and the compensation means (4) up to the working height of the operating head, before the machine is used. In contrast, the compensation means (4) intervene when the machine is used and are conformed in such a way as to push the operating head (L) toward the panel (P) in an adjustable and controlled way in order to keep the feeler (3) abutting against the panel (P) so that the entire operating head (L) can float around the working height in accordance with the unevenness and/or irregularities in the surface (P1) of the panel (P), thus compensating for the unevenness and/or irregularities in the surface (P1) of the panel (P) and allowing the tool (U) to always operate at the same depth.

Thus, the handling means (5) are set for large translations of the operating head; whereas the compensation means (4) are set for translations around a small interval given by the depressions, protrusions and/or curvatures of the panel.

Since, during use, the entire operating head (L) translates according to the irregularities, roughness and/or unevenness on the surface (P1) of the panel (P), the tool (U) tightened by the spindle (20) will also move vertically along with the entire operating head (L). So, the tool (U) follows the movement of the feeler (3) caused by the unevenness and/or irregularities on the surface (P1) of the panel (P).

The compensation means (4) are operated through a control unit (UC) of the machine (M) that adjusts the force with which the compensation means (4) push the operating head (L) toward the panel (P).

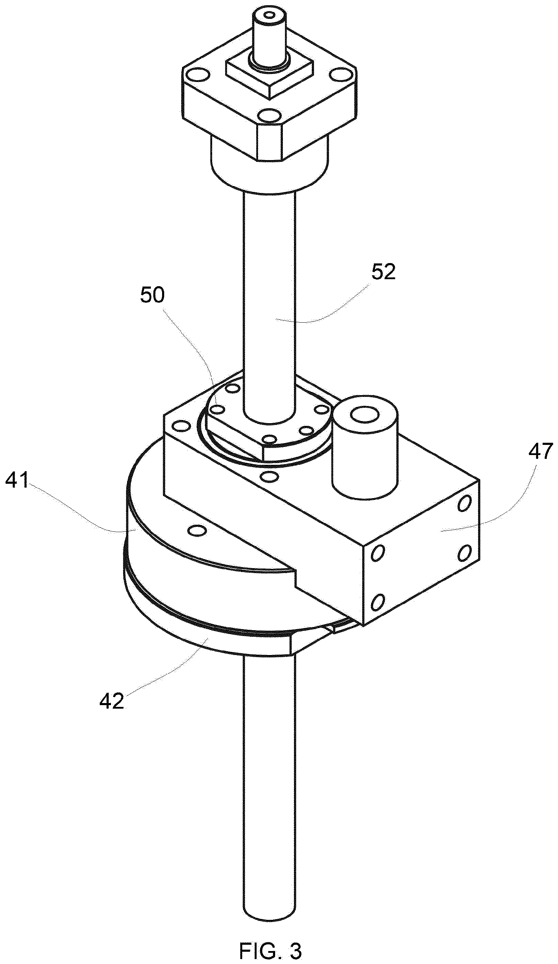

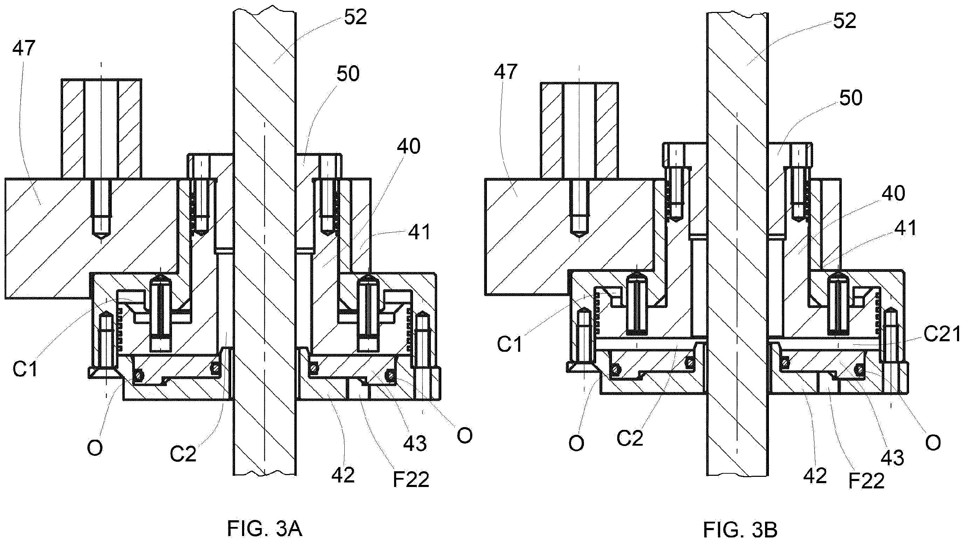

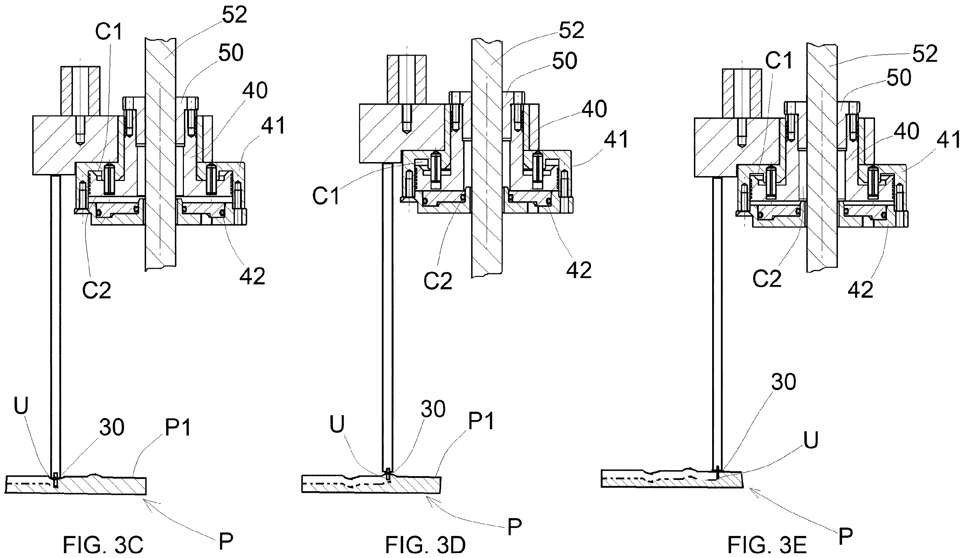

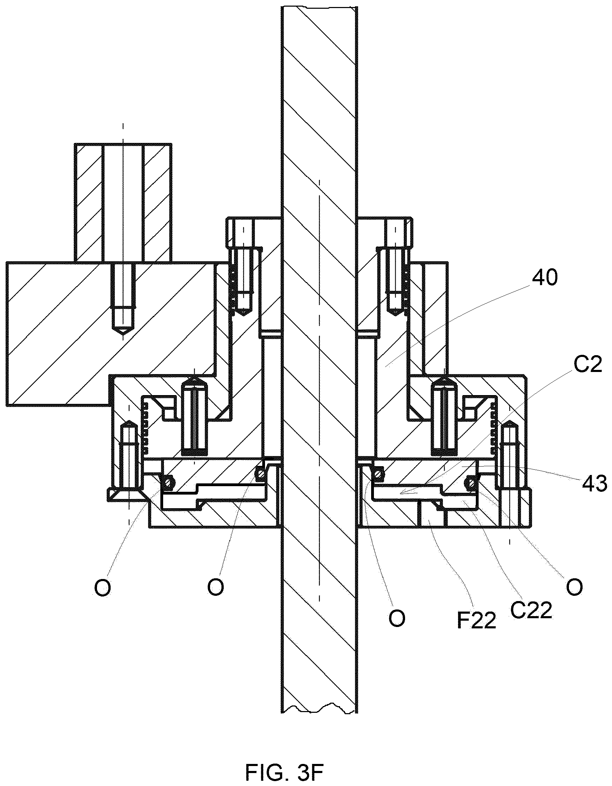

Referring to Figs. 3, 3A and 3B, the compensation means (4) comprise:
- a cylinder (41, 42);
- a piston (40) slidingly arranged inside the cylinder (41, 42) and defining a first chamber (C1) and a second chamber (C2) inside the cylinder (41, 42); and
- a feed system connected to the first chamber (C1) to fill the first chamber (C1) with a pressurized fluid.

The fluid is preferably air; however, oil or other liquids can also be used.

Although not shown in the attached figures, the feed system comprises pipes or ducts connected to holes of the first chamber (C1), and a pressure regulator operated by the control unit (UC) that regulates the fluid pressure inside the first chamber (C1). The pressure regulator can be a proportional control valve that is electrically actuated by the control unit (UC).

Specifically, the control unit (UC) has a memory in which preset pressure values are stored for the first chamber (C1). The pressure values stored in the control unit (UC) depend on the material being processed, the type of processing, and the type and size of tool used. In fact, the thrust pressure of the tool (U) and of the feeler (3) on the workpiece must vary according to the material and to the cutting characteristics and the size of the tool itself.

The adjustment and control of the fluid pressure in the first chamber (C1) allows to:
- compensate for the weight of the entire operating head (L);
- keep the abutment surface (30) of the feeler (3) constantly in contact with the surface (P1) of the panel (P) regardless of imperfections on the surface (P1) of the panel (P);
- constantly push the tool (U) against the panel (P) to counteract the opposite reaction due to the removal action that tends to raise it;
- avoid irreparable damage on the surface (P1) of the panel (P) being machined (which is often already finished), in case of excessive pressure.

The piston (40) is preferably connected to the handling means (5), whereas the cylinder (41, 42) is integral to the operating head (L). Specifically, the cylinder (41, 42) is connected to the support frame (S) of the operating head (L) by means of a connecting element (47) consisting of a parallelepiped block that protrudes from the cylinder (41, 42) and is attached to the cylinder (41, 42) and to the support frame (S) of the operating head (L).

Referring to Figs. 1, 2, 3, 3A and 3B, the handling means (5) comprise:
- a motor (51) mounted on the support head (T);
- a screw (52) parallel to the vertical axis of translation (Z) and driven in rotation by the motor (51);
- a nut (50) coupled with the screw (52) and attached to the piston (40) of the compensation means (4).

With particular reference to Figs. 3A and 3B, the piston (40) comprises an axial cavity crossed by the screw (52).

The cylinder (41, 42) comprises an outer liner (41), which surrounds the piston (40), and a closure member (42), which closes the outer liner (41) inferiorly and comprises a central cavity crossed by the screw (52).

When the panel surface is flat and has no irregularities, the cylinder (41, 42) and piston (40) are disposed in an intermediate position between those shown in Figs. 3A and 3B.

With reference to Figs. 3C, 3D and 3E, the behavior of the compensation means (4) during the machining of the panel (P) is shown.

Fig. 3C shows the behavior of the compensation means (4) when the feeler (3) and the tool (U) encounter a depression on the surface (P1) of the panel (P).

Fig. 3D shows the behavior of the compensation means (4) when the feeler (3) and the tool (U) encounter a prominence or protrusion.

In contrast, Fig. 3E shows the behavior of the compensation means (4) when the feeler (3) and the tool (U) are in a section of the surface (P1) of the panel (P) free of irregularities.

Before starting the machining of the panel (P), the chamber (C1) is pressurized by the fluid. The fluid pressure inside the first chamber (C1) is modulated by means of the electrically actuated proportional control valve controlled by the control unit (UC); the magnitude of the regulated pressure depends on the type of machining to be carried out in the panel (P), the type of material and the type of tool used. In particular, the pressure of the fluid inside the first chamber (C1) must be such to compensate for the weight of the entire operating head (L), ensure the contact of the abutment surface (30) with the panel (P), and graduate the thrust force of the tool and of the feeler (3) against the panel.

Referring to Fig. 3C, when the feeler (3) and the tool (U) encounter the depression, the entire operating head (L) is lowered by gravity, keeping the feeler (3) in contact with the surface (P1) of the panel (P) and allowing the tool (U) to always machine or mill the panel (P) at the same depth, including in the depression. In such a case, the volume of the first chamber (C1) decreases, leading to an increase in the pressure of the fluid contained in said first chamber (C1). At this point, however, the control unit (UC) intervenes to set and operate the control valve and maintain the fluid pressure inside the first chamber (C1) at the preset pressure.

With reference to Fig. 3D, when the feeler (3) and the tool (U) encounter the prominence or protrusion, the cylinder (41, 42) rises under the thrust action exerted by the feeler (3), causing the entire operating head (L) to be raised. In such a case, the volume of the first chamber (C1) increases, resulting in a decrease in pressure of the fluid contained in said first chamber (C1). At this point the control unit (UC) intervenes to operate the control valve in order to maintain the fluid pressure at the preset pressure.

With reference to Fig. 3E, when the feeler (3) and the tool (U) are in the section of the surface (P1) of the panel (P) free of irregularities, then the cylinder (41, 42) is in an intermediate position between the positions shown in Figs. 3C and 3D.

In order to obtain a perfect copying of the panel, it is necessary for the compensation means (4) to have an extremely rapid response.

To achieve such a rapid response to variations, the applicant has decided not to use hermetic seals, such as O-rings or gaskets, between the piston and the outer liner, which would generate an excessive friction between the piston (40) and the outer liner (41), slowing down the response of the system. However, the absence of such sealing elements inevitably results in a continuous flow of fluid to the second chamber (C2) resulting in a loss of pressure in the first chamber (C1), which is, however, restored by the control valve operated by the control unit (UC) that constantly returns the pressure in the first chamber (C1) to the preset pressure. If the pressurized fluid inside the first chamber (C1) is air, then the air flowing from the first chamber (C1) to the second chamber (C2) escapes from the second chamber (C2), passing through the axial cavity of the piston and through openings between the nut (50) and the screw (52) and/or through openings between the nut (50) and the piston (40). If the fluid is a liquid, such as oil, the second chamber (C2) will be provided with drain holes to discharge the oil that leaks from the first chamber (C1) into the second chamber (C2).

In some machining operations, such as drilling, through milling, cutting, etc., the floating effect is not desired and indeed in such cases it is necessary for the system to be completely rigid.

In this regard, the applicant has decided to provide the compensation means (4) with locking means conformed in such a way as to block the relative movement between the piston (40) and the cylinder (41, 42).

The locking means comprise a plate (43) slidingly mounted inside the second chamber (C2) so that it can alternately assume a locking position, shown in Fig. 3F, wherein it abuts against the piston (40), locking it, and an idle position, shown in Figs. 3A and 3B, wherein it does not lock the piston (40).

Specifically, the plate (43) defines two complementary sub-chambers (C21 and C22) inside the second chamber (C2), namely:
- a first sub-chamber (C21), shown in Fig. 3B, defined at the ends by the piston (40) and the plate (43); and
- a second sub-chamber (C22), shown in Fig. 3F, defined at the ends by the plate (43) and the closure element (42) of the cylinder (41, 42).

A feed system is connected to the second sub-chamber (C22) to fill the second sub-chamber (C22) with a pressurized fluid (preferably air) so as to bring the plate (43) into thrust against the piston (41) and consequently stop the relative motion between the piston and the cylinder. The feed system is connected to the second sub-chamber (C22) by means of conduits or pipes connected to a hole (F22) machined on the locking element (42).

The plate (43) comprises O-rings (O) that generate an airtight seal. The O-rings (O) hermetically separate the two sub-chambers (C21, C22), preventing the pressurized fluid from escaping from the second sub-chamber (C22).

To stop the relative movement between the piston (40) and the cylinder (41, 42), it is necessary to take pressure off the first chamber (C1) and give pressure to the second sub-chamber (C22) so that the plate (43) rises and constantly pushes against the piston (40), as shown in Fig. 3F.

In the preferred embodiment of the invention, said tool (U) is a milling tool and the axis of rotation (F) is parallel to the vertical axis of translation (Z) on which the operating head (L) translates.

Referring to Figs. 4 to 10 and 17 and 18, the feeler unit (1) comprises a shaft (7) having a lower end (71) that supports the feeler (3). The shaft (7) has a longitudinal axis (Z7) parallel to the vertical axis of translation (Z).

The feeler unit (1) also comprises adjustment means (6) to adjust a height of the feeler (3) along a direction parallel to the vertical axis of translation (Z).

Specifically, the adjustment means (6) are connected to the shaft (7) and are configured to slide the shaft (7) along its longitudinal axis (Z7).

The adjustment means (6) comprise a motor (60), a screw (61) connected to the motor (60), and a nut (62) helically coupled with the screw (61) and attached to an upper end (72) of the shaft (7). Therefore, by operating the motor (60), it is possible to slide the shaft (7) up and down as shown, for example, in Figs. 4 and 5 and Figs. 9 and 10.

The probe (3) preferably comprises an annular foot (33) that protrudes from the shaft (7) and has a central hole (33a). During use, the annular foot (33) is suitable for being arranged around the tool (U) such that the tool (U) has an end section that protrudes from the abutment surface (30) of the feeler (3). The length of the end section corresponds to the machining (milling) depth at which the tool (U) will work. The annular shape of the annular foot (33a) provides an abutment surface (30) that completely surrounds the tool (U) and is capable of intercepting depressions or protrusions in the surface of the panel (P) regardless of the direction in which the panel (P) is machined.

When replacing the tool (U), if the center hole (33a) has a larger diameter than the diameter of the end part (22) of the electrospindle, then it is possible to raise the annular foot (33) until it is disposed above the spindle (20) and around the end part (22) (as shown in Figs. 5 and 5A). In this way, the tool (U) can be replaced by simply disengaging the tool from the spindle (20) and then engaging another tool.

With reference to Figs. 6 and 7, if the annular foot (33) is small and has a central hole (33a) with a smaller diameter than the diameter of the end part (22), such as in the case of machining small panels, then it will not be possible to arrange the annular foot (33) above the spindle (20), i.e., around the end part (22), and therefore such an annular foot (3) would be an obstacle for the replacement of the tool.

To overcome such a problem, the feeler unit (1) is equipped with rotational means (8) connected to the shaft (7) and conformed in such a way to rotate the shaft (7) about its longitudinal axis (Z7), in such a way that the annular foot (33) is positioned alternately between an operating position, wherein said central hole (33a) of the annular foot (33) is coaxial to the axis of rotation (F) of the spindle (20) (see Fig. 6), and an idle position, wherein the axis of rotation (F) of the spindle does not pass through the central hole (33a) (see Fig. 7).

Referring to Figs. 13, 15 and 16, the rotational means (8) comprise:
- a pinion (81) coupled to the shaft (7) by means of a splined coupling so that the shaft (7) can slide vertically relative to the pinion (81) but cannot rotate relative to the pinion (81);
- a rack (82) meshing with the pinion (81); and
- an actuator (83) connected to the rack (82) to make the rack (82) translate.

The actuator (83) comprises a cylinder-piston assembly.

The pinion (81) includes keys (85) threaded into longitudinal splines (75) machined on the shaft (7). The coupling of the keys (85) and of the longitudinal splines (75) allows for the aforementioned splined-type coupling between the shaft (7) and the pinion (81).

To replace the tool (U), it will be necessary to lower the annular foot (33) below the tip of the tool (U) and then operate the rotational means (8) so that they position the annular foot (33) in the idle position shown in Fig. 7. Preferably, the rotational means (8) are configured to rotate the shaft (7) by an angle of about 40°.

Referring to Figs. 8, 9, 10, 11, 17 and 18, the feeler unit (1) further comprises supporting and centering means (11, 12, 13, 14, 15 and 16) for said shaft (7).

The supporting and centering means (11, 12, 13, 14, 15 and 16) comprise a central body (11) attached to the support frame (S) crossed by the shaft (7) and comprising a seat in which the pinion (81) is placed and a channel in which the rack (82) is slidably inserted.

The supporting and centering means (11, 12, 13, 14, 15, 16) also comprise an upper sleeve (12) attached superiorly to the central body (11), a lower sleeve (13) attached inferiorly to the central body (11), both being crossed by the shaft (7). The screw (61) of the adjusting means (6) is disposed inside the upper sleeve (12) and the nut (62) of the adjusting means (6) slides inside the upper sleeve (12).

A support (14) is disposed above the upper sleeve (12), to which the motor (60) is attached and inside which a joint (600) is arranged to connect a shaft of the motor (60) with the screw (61).

The supporting and centering means (11, 12, 13, 14, 15 and 16) also comprise a ring (15) that is attached to the support frame (S) and surrounds a lower section (73) of the shaft (7).

Referring to Figs. 12 and 17, the feeler (3) comprises holes (30a) drilled in the abutment surface (30) from which pressurized air is intended to escape so that a sort of air cushion is generated between the abutment surface (30) and the surface of the panel (P) that reduces the friction between the surfaces as the feeler slides over the panel. The pressurized air is supplied through a pneumatic system communicating with the holes (30a). In the particular embodiment of the invention, the lower section (73) has an axial cavity (730) communicating with the holes (30a). A pneumatic distributor (D) is attached at the lower section (73), which is in communication with the axial cavity (730) and on which the pneumatic system that supplies pressurized air is connected.

Referring to Figs. 14, 16 and 16A, the supporting and centering means (11, 12, 13, 14, 15 and 16) also comprise two guide keys (16) which are mounted on the central body (11) in diametrically opposite positions to the shaft (7). Each guide key (16) is suitable for being alternately engaged in a first guide groove (s1), when the annular foot (33) is in the operating position, and in a second guide groove (s2), when the annular foot (33) is in the idle position. The two guide grooves (s1, s2) are joined at the top by an upper section (s3).

When the shaft (7) has reached a completely lowered position, the upper section (s3) is at the same height as the guide key (16) (see Fig. 16 and 16A), and therefore the shaft (7) can be rotated about its own axis (Z7) so that the guide key (16) can pass from the first guide groove (s1) to the second guide groove (s2) or vice versa by crossing the upper section (s3).

In this way, the shaft (7) is always guided along the longitudinal axis (Z7) without any clearance both when the annular foot (33) is in the operating position and when the annular foot (33) is in the idle position.

It should be noted that the motors (51, 60), the drive means (20) of the spindle (2), the actuator (83) and the compensation means (4) are all connected to the control unit (UC) so that they can be managed by said control unit (UC).

In this way, the milling variables, such as the milling depth, the thrust intensity of the tool and of the feeler against the panel, and the rotational speed of the spindle can be directly managed simultaneously by the machine control unit (UC) (M) during the machining of the panel.

As a result of the above description, the advantages of the present invention over the current copying aggregators of the prior art now become apparent.

The presence of the guiding means (G) and of the compensation means (4) between the operating head (L) and the support head (T) allows the entire operating head (L) to translate relative to the support head (T) and at the same time to have the feeler (3) constantly abutting the surface of the panel (P), thus allowing the tool (U) to work or mill the panel (P) always to the same depth without the complex and expensive copying aggregators of the prior art.

In addition, the machine according to the invention makes it possible to have the tool (U) directly attached to the spindle (20) without the interposition of the copying aggregates of the prior art.

Such a peculiarity makes it possible to have a system that is extremely more accurate than the ones of the prior art since it is not subject to the aforementioned clearances that impair the aggregates of the prior art.

In addition, being attached directly to the spindle, the tool can support greater stresses than when the tool is mounted on a copying aggregate of the prior art. In view of the above, it is possible to make wide and deep grooves (as in pantographing) with a reduced number of tools and operations compared with the copying aggregates of the prior art.

Needless to say, the reduction in the number of operations and in the number of tools to be used consequently reduces the time and cost of the machining process.

In addition, since the function of compensating the irregularities of the panel surface is assigned to the compensation means (4) arranged between the operating head (L) and the support head (T), the change of the tool (U) is extremely faster and easier to carry out for an operator who will simply have to disengage the tool (U) from the spindle (20) and engage a new tool (U) to it.

Thanks to the simultaneous presence of the handling means (5), the adjustment means (6) and the compensation means (4), it is possible to continuously vary the working depth of the tool (U) without having to stop the machine and still keeping the feeler (3) in constant abutment against the surface of the panel.

In fact, by simultaneously moving the entire operating head (L) and the feeler (3) in opposite directions, it is possible to lower or raise the tool while still keeping the feeler in contact with the panel surface.

By way of example, if during the machining of the panel the operator wants to go deeper than a given height to make three-dimensionally variable milling, then it will be necessary to lower the entire operating head (L) by the given height and simultaneously raise the foot (3) by the same height. So, by simultaneously operating and managing the handling means (5), the adjustment means (6) and the compensation means (4), it is possible to vary the milling depth as desired without having to stop the machine. As an example, a panel (P) having a notch with a variable depth is shown in Fig. 20 and 20A by exploiting the simultaneous activation of the handling means (5) and of the adjustment means (6).

By exploiting the aforementioned advantage of being able to vary the machining depth and simultaneously moving the entire working unit (MT) on a plane orthogonal to the axes (Z and Z7), it is possible to make curvilinear cavities of variable depth on the panel (P), for example cavities (cv) of pseudo-spherical shape, as shown in Figures 21 and 21A, or conical or cavities of any three-dimensional shape, while still maintaining the compensation feeler function,

Due to the provision of the handling means (5) and of the compensation means (4) separated from each other, the machine according to the invention always has the same performance and the same behavior, regardless of the working height of the working head (L), unlike in the machine tool described in WO02074486A1. In fact, since the compensation means (4) are interposed between the handling means (5) and the working head (L), said compensation means (4) are raised and lowered together with the working head (L), without their position being varied during such raising or lowering. Obviously, since the position of the compensation means (4) does not vary with the working height of the working head (L), they always operate in the same manner and with the same performance.

Numerous variations and modifications of detail may be made to the present embodiment of the invention, within the scope of an expert of the field, but still within the scope of the invention as expressed by the appended claims.

## Claims

1. A computer numerical control machine (M) for machining a panel (P); said machine (M) comprising:
- a working unit (MT) comprising a support head (T) and an operating head (L) connected to the support head (T); and
- a handling unit (M1) for handling said working unit (MT); wherein said operating head (L) comprises:
- a support frame (S);
- a spindle (20) rotatably supported by the support frame (S) around an axis of rotation (F); said spindle (20) being suitable for attaching a tool (U) to machine the panel (P);
- drive means (2) mounted on the support frame (S) to drive said spindle (20) into rotation;
- a feeler unit (1) mounted on the support frame (S);
- a feeler (3) supported by the feeler unit (1); said feeler (3) comprising an abutment surface (30) suitable for abutting against a surface (P1) of said panel (P) during the machining of the panel;
wherein said working unit (MT) comprises:
- guiding means (G) connecting the operating head (L) to the support head (T); said guiding means (G) being configured in such a manner as to enable the operating head (L) to translate with respect to the support head (T) along a vertical axis of translation (Z) orthogonal to the abutment surface (30) of the feeler (3);
- handling means (5) for moving said operating head (L) relative to the support head (T) along the vertical axis of translation (Z), in such a way to position the operating head (L) to a preset working height wherein the feeler (3) abuts against the surface (P1) of the panel (P);
**characterized in that**
said working unit (MT) comprises compensation means (4) disposed between the handling means (5) and the operating head (L) in such a way to support the operating head (L) and to be moved by the handling means (5);
wherein said compensation means (4) are configured in such a way as to push the operating head (L) toward the panel (P) in a controlled way and keep the feeler (3) in contact against the panel (P) so that the entire operating head (L) can float around the working height according to differences in level and/or irregularities of the surface (P1) of the panel (P), and/or curvatures of the panel, thus compensating any unevenness, irregularities and/or curvatures of the panel (P), and allowing the tool (U) to operate always at the same speed.

2. The machine (M) according to claim 1, wherein said compensation means (4) comprise:
- a cylinder (41, 42);
- a piston (40) slidingly arranged inside the cylinder (41, 42) and defining a first chamber (C1) and a second chamber (C2) inside the cylinder (41, 42); and
- a feed system connected to the first chamber (C1) for filling the first chamber (C1) with a pressurized fluid.

3. The machine (M) according to claim 2, wherein said feed system of the compensation means (4) comprises a proportional control valve controlled by a control unit (UC) of the machine.

4. The machine according to claim 2 or 3, wherein said piston (40) is connected to the handling means (5) and said cylinder (41, 42) is integral with the operating head (L).

5. The machine according to claim 4, wherein said handling means (5) comprise:
- a motor (51) mounted on the support head (T);
- a screw (52) parallel to the vertical axis of translation (Z) and driven into rotation by the motor (51);
- a nut (50) coupled with the screw (52) and attached to the piston (40) of the compensation means (4).

6. The machine according to claim 5, wherein:
- said piston (40) comprises an axial cavity crossed by the screw (52);
- said cylinder (41, 42) comprises an outer liner (41) surrounding the piston (40), and a closure member (42) inferiorly closing the outer liner (41) and comprising a central hole crossed by the screw (52).

7. The machine according to any one of claims 2 to 6, wherein said compensation means (4) comprise locking means configured so as to lock the relative movement between the piston (40) and the cylinder (41, 42) to deactivate the compensation means (4).

8. The machine according to claim 7, wherein said locking means comprise a plate (43) slidingly inside the second chamber (C2) in such a manner as to be alternately disposed in:
- a locking position, wherein it abuts and locks the piston (40), and
- an idle position, wherein it does not interfere with the piston (40).

9. The machine according to any one of the preceding claims, wherein said feeler unit (1) of the operating head (L) comprises a shaft (7) provided with a lower end (71) supporting said feeler (3); said shaft having a longitudinal axis (Z7) parallel to the vertical axis of translation (Z); wherein said feeler unit (1) also comprises adjusting means (6) configured in such a way to make the shaft (7) slide along its longitudinal axis (Z7).

10. The machine according to claim 10, wherein said adjusting means (6) comprise:
- a motor (60);
- a screw (61) connected to the motor (60);
- a nut (62) helically coupled with the screw (61) and attached to an upper end (72) of the shaft (7).

11. The machine according to claim 9 or 10, wherein said feeler (3) comprises an annular foot (33) that projects from the shaft (7) and has a central hole (33a).

12. The machine according to claim 11, wherein said feeler unit (1) comprises rotational means (8) connected to said shaft (7) and configured so as to rotate said shaft (7) about its longitudinal axis (Z7) in such a manner as to dispose said annular foot (33) alternately between an operating position, wherein said central hole (33a) of the annular foot (33) is coaxial with the axis of rotation (F) of the spindle (20), and an idle position wherein the axis of rotation (F) of the spindle does not pass through the central hole (33a).

13. The machine according to claim 12, wherein said rotational means (8) comprise:
- a pinion (81) coupled to the shaft (7) by means of a splined coupling so that the shaft (7) can slide relative to the pinion (81) but cannot rotate relative to the pinion (81);
- a rack (82) meshing with the pinion (81);
- an actuator (83) connected to the rack (82) to make the rack (82) translate.

14. The machine according to claim 13, wherein said pinion (81) comprises keys (85) inserted into longitudinal grooves (75) formed on the shaft (7).

15. The machine according to claim 13 or 14, wherein said feeler unit (1) comprises supporting and centering means (11, 12, 13. 15 and 16) for said shaft (7); wherein said supporting and centering means (11, 12, 13, 14, 15 and 16) comprise:
- a central body (11) attached to the support frame (S) and crossed by the shaft (7) and comprising a seat wherein the pinion (81) is placed and a channel wherein the rack (82) is slidably inserted; and
- two guide keys (16) mounted on the central body (11); wherein each guide key (16) is suitable for being alternately engaged in a first guiding groove (s1), when the annular foot (33) is in the operating position, and in a second guiding groove (s2), when the annular foot (33) is in the idle position.
